# FASCICULE DE BREVET EUROPEEN

(11) **EP 1 825 312 B1**
(45) Date de publication et mention de la délivrance du brevet: **14.05.2008**
(21) Numéro de dépôt: 05826577.8
(22) Date de dépôt: 15.12.2005
(51) Int. Cl.: G02B 6/42, G01J 3/26

(54) **DETECTEUR ET CAMERA SPECTROSCOPIQUES INTERFERENTIELS**
INTERFERENZ-SPEKTROSKOPIEDETEKTOR UND KAMERA
INTERFERENTIAL SPECTROSCOPY DETECTOR AND CAMERA

(30) Priorité: 15.12.2004 FR 0452992
(43) Date de publication de la demande: 29.08.2007
(73) Titulaire: Université Joseph Fourier, 38041 Grenoble Cedex 9 (FR); Institut National Polytechnique de Grenoble, 38031 Grenoble Cedex (FR)
(72) Inventeur: LE COARER, Etienne, F-38100 Grenoble (FR); BENECH, Pierre, F-38100 Grenoble (FR)
(74) Mandataire: Bredema
(86) Numéro de dépôt international: PCT/FR2005/003147
(87) Numéro de publication internationale: WO 2006/064134

(56) Documents cités:
- US-A- 5 943 136
- US-A1- 2003 038 938
- US-A1- 2004 071 396

## Description

La présente invention se rapporte au domaine des détecteurs électroniques.

La présente invention se rapporte plus particulièrement à un détecteur électronique permettant de fournir une information spectrale d'un champ électromagnétique.

Les détecteurs actuels ne possèdent pas de capacité à mesurer la longueur d'onde d'un photon incident. Tout au plus, il existe des techniques de supraconductivité de type JSET très lourdes à utiliser et de résolution spectrale limitée.

L'art antérieur connaît également des molécules photo-chimiques capables de garder la mémoire de la longueur d'onde des photons, mais elles sont limitées à un domaine spectral très réduit, et doivent être converties au moyen d'un scanner coûteux.

Par ailleurs, de manière générale, la spectroscopie de champs est réalisée au moyen de spectroscopes volumineux répartissant la lumière sur un détecteur bidimensionnel.

En marge de ces détecteurs actuels, il convient de citer que dès 1891, Gabriel Lippmann avait proposé un détecteur basé sur une sensibilisation argentique dans l'épaisseur d'une gélatine et utilisant l'effet produit par la lumière en se réfléchissant sur un miroir pour créer une onde stationnaire.

L'art antérieur connaît à ce titre le brevet US6044102 (Labeyrie) qui décrit un procédé et un système de transmission d'information par fibre optique. Un signal lumineux est émis par un système basé sur un laser qui multiplexe l'information en utilisant l'effet Lippmann inverse. Dans la partie du brevet qui décode le signal, le brevet divulgue un système de démultiplexage basé sur l'effet Lippmann. Il est fait alors référence à un milieu photosensible disposé à l'instar de son système d'émission laser sans pour autant donner une réalisation pratique fonctionnelle.

Ce document divulgue l'utilisation de l'effet Lippmann mais est limité à un domaine spectral étroit de l'ordre de la largeur de bande du laser.

Les documents US2004/071396, US2003/038938 et US5943136 divulguent des spectroscopes basés sur les réflections multiples ayant lieu dans des guides d'ondes optiques.

Un des objets de la présente invention est donc de résoudre les inconvénients de l'art antérieur pour une largeur de l'ordre de la largeur de bande d'un guide d'onde.

La présente invention entend exploiter cet effet Lippmann au sein d'un guide d'onde pour pallier les manques de l'art antérieur et concerne un détecteur spectroscopique interférentiel comprenant les caractéristiques de la revendication 1.

De préférence, le guide d'onde est de type monomode. Il peut également être multimode en relâchant certaines contraintes sur la résolution.

De préférence, lesdits moyens de détection sont formés par une pluralité de détecteurs locaux répartis entre la face d'entrée et le miroir.

Avantageusement, lesdits moyens de détection sont formés par au moins un détecteur local mobile entre la face d'entrée et miroir.

Dans ce cas, le détecteur comporte des moyens de détermination de la position du détecteur local mobile, pour délivrer des signaux en fonction de la position dudit détecteur local et de l'intensité locale de l'onde électromagnétique.

Par ailleurs, lesdits détecteurs locaux sont soit sensiblement équidistants soit répartis selon une loi apériodique dans le but de minimiser la perturbation de l'onde stationnaire.

De préférence, deux détecteurs locaux consécutifs sont éloignés d'une distance sensiblement égale au quart de la longueur d'onde correspondant à la valeur inférieure du spectre étudié.

Avantageusement, il comporte en outre un calculateur réalisant un échantillonnage des signaux fournis par lesdits détecteurs locaux, ainsi que la détermination du spectre en fonction desdits signaux échantillons.

De préférence, il comporte en outre un calculateur analogique fournissant le spectre en fonction desdits signaux fournis par les détecteurs locaux.

La présente invention se rapporte également à un système d'imagerie spectrométrique caractérisé en ce qu'il est constitué par une pluralité de détecteurs selon l'invention, disposés selon une matrice, les faces d'entrée des détecteurs étant dans le plan focal d'une optique d'entrée.

Selon les cas, la matrice est soit régulière, soit irrégulière.

On comprendra mieux l'invention à l'aide de la description, faite ci-après à titre purement explicatif, d'un mode de réalisation de l'invention, en référence aux figures annexées où :

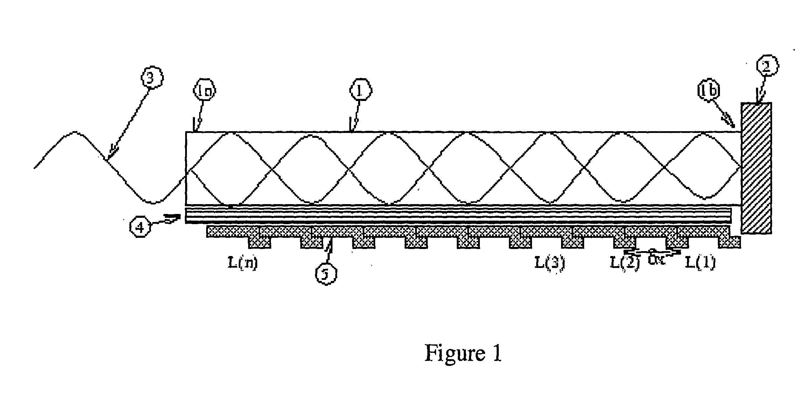

- la figure 1 illustre un détecteur selon l'invention dans le cas d'un guide d'onde simple ;
- la figure 2 illustre un exemple d'interférogramme obtenu par le détecteur selon l'invention ;
- la figure 3 illustre un détecteur selon l'invention dans le cas d'une ligne hyperfréquence dans le domaine de la radio ;
- la figure 4 illustre un détecteur selon l'invention dans le cas d'une fibre optique polie jusqu'au coeur sur lequel on dispose des détecteurs locaux comme des fils supraconducteurs HEB par exemple ;
- la figure 5 illustre un détecteur selon l'invention dans le cas d'un élément doté d'une microlentille pour l'adaptation au guide monomode, disposé perpendiculairement à la surface d'un substrat de type circuit intégré pour réaliser une matrice ;
- la figure 6 illustre un détecteur selon la figure 5 qui utilise un cornet à la place de la microlentille et un exemple de détecteur local annulaire.

Le détecteur selon l'invention comprend un guide d'onde optique 1. Aux fins de la présente invention, le terme guide d'onde sera employé pour désigner de façon générale un guide plein comme une fibre optique, ou un guide creux, ou une ligne précédée d'une antenne, tel qu'un coaxial. Il faut noter que ce guide d'onde est de préférence monomode. Les dimensions du système sont donc comparables à quelques longueurs d'onde analysée et par conséquent très petits par rapport à l'ensemble des systèmes utilisés la spectroscopie de l'art antérieur.

Le guide d'onde 1 définit une face d'entrée 1a et une face opposée à la face de sortie 1b. Un miroir 2 est alors positionné au niveau de la face opposée 1b du guide d'onde.

Une onde stationnaire 3 est donc crée au sein du guide 1 par effet Lippmann.

L'intensité de cette onde stationnaire répond à une distribution spatiale sinusoïdale du type I(x)= 1 - cos(4πnx/λ), ou I est l'intensité, x est la distance au miroir, n est l'indice du milieu dans lequel se propage l'onde, et λ est la longueur d'onde.

Le principe général de l'invention est alors d'utiliser des détecteurs locaux photosensibles permettant de détecter cette intensité lumineuse et de retrouver le spectre de la lumière.

Selon un premier mode de réalisation, on positionne une pluralité de détecteurs locaux fixes 5 à l'extérieur du guide 1. Pour réaliser ces détecteurs locaux, on peut par exemple utiliser un matériau sensible aux ondes évanescentes issues du guide 1. Les détecteurs 5 échantillonnent alors l'intensité des ondes évanescentes.

L'homme du métier comprendra bien que si l'on désire détecter une longueur d'onde λ, les détecteurs sont espacés d'une distance sensiblement égale à λ/4, afin de reconstruire le signal correspondant.

Pour la détection d'un spectre plus large, cette distance doit être le quart de la longueur d'onde correspondant à la valeur inférieure du spectre étudié. Les longueurs d'ondes inférieures seraient alors détectées avec une efficacité moindre voire ne plus du tout contribuer aux système d'interférence.

Dans le cas d'un spectre limité à un domaine spectral plus étroit, il est possible d'espacer les détecteurs locaux de façon à sous-échantillonner l'interférogramme tout en respectant le théorème de Shannon en bande étroite. Dans ce cas, la taille du détecteur doit rester plus petite que le quart de la longueur d'onde la plus courte.

La couche détectrice 5 comprend donc par exemple une pluralité de détecteurs locaux équidistants en faisant attention qu'une répartition régulière peut entraîner une perturbation de la transmission de l'onde par un effet de Bragg.

Pour solutionner ce problème, on peut éventuellement positionner un milieu photosensible continu entre le guide d'onde et les détecteurs locaux régulièrement espacés, ou bien positionner les détecteurs locaux d'une manière apériodique comme par exemple une série d'espacement qui serait définis par la suite des nombres premiers.

On notera que ces détecteurs peuvent être de plusieurs sortes sans limitation pour la portée de l'invention.

Ce sont par exemple des jonctions pn photoconductrices réalisées sur un substrat semi-conducteur aminci comportant des photodiodes et des électrodes pour collecter un courant aux bornes des photodiodes. Ce substrat est adjacent au guide d'onde 1 soit par adhésion moléculaire, soit par collage.

Les détecteurs peuvent également être des microbolomètres par fils supraconducteurs formant un réseau réparti entre la face d'entrée et du guide d'onde 1 et le miroir 2.

Il est également envisageable d'utiliser des microantennes, des photoconducteurs de type Sélénium ou des photodétecteurs à effet Josephson.

Selon un mode de réalisation particulier, un élément optique plus petit que le quart de la longueur d'onde la plus courte analysé par le système peut également être situé à proximité du guide ou dans le guide pour prélever une partie de l'onde et la conduire vers un détecteur placé dans la proximité du système, comme un pixel de CCD par exemple. Un tel élément optique peut être un point diffusant, une facette, ou tout matériau ou système créant une dérivation de l'énergie de l'onde. Une fois l'onde extraite du guide, il est également possible de transmettre cette onde vers un capteur distant pour effectuer une détection à distance représentative de l'état de l'onde au sein du guide, entre la face d'entrée, et le miroir.

De la sorte, la détection des rayonnements électromagnétiques peut être réalisée selon l'invention entre la face d'entrée du guide d'onde et le miroir en faisant sortir une partie de l'onde par un élément optique tel que précédemment décrit. L'élément optique destiné à faire sortir une partie de l'onde du guide d'onde fait alors partie des moyens de détection selon l'invention, et dans ce cas, la détection peut intervenir à distance du guide, une fois une certaine quantité d'énergie extraite du guide.

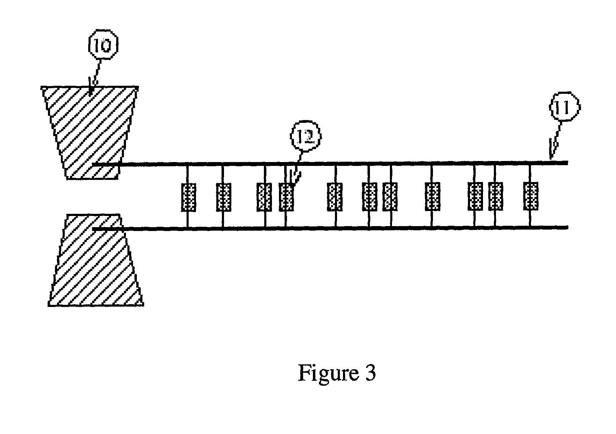

La figure 3 représente la réalisation dans le domaine des micro-ondes. On positionne une antenne 10 d'où part une ligne 11 qui peut être supraconductrice. Le bout de la ligne 11 se comporte comme un miroir. Des éléments 12 sont N microbolomètres qui prélèvent une partie 1/N du signal. L'écart entre les bolomètres est soit régulier, soit non régulier pour éviter les réflections de Bragg.

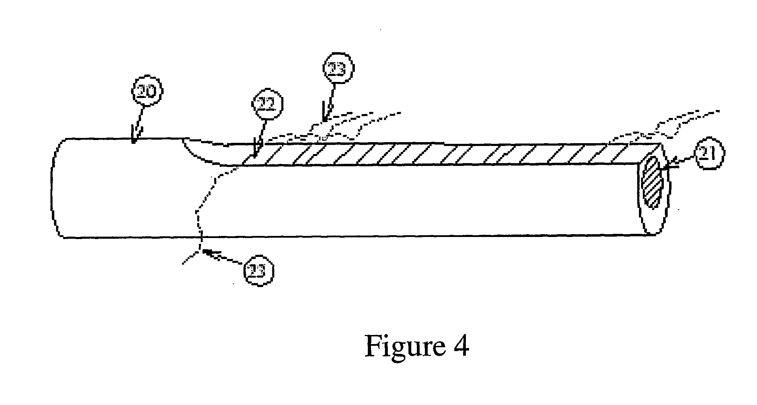

La figure 4 montre une réalisation de ce principe sur le bout d'une fibre optique 20. Un miroir 21 est disposé au bout du coeur de la fibre. Des détecteurs locaux 22 comme des fils supraconducteurs utilisent l'effet Hot Electron Bolometer (HEB). Cet effet est par exemple décrit dans la publication de Romestain et al. dans le New Journal Of Physics, Tome 6, 2004. Des fils 23 établissent la connexion avec l'électronique. Cette disposition est utilisée dans le cas des guides d'ondes planaires.

Selon un second mode de réalisation non illustré, la détection est réalisée par un ou plusieurs détecteurs mobiles entre la face d'entrée et le miroir. Dans ce cas, le dispositif comprend un moyen de détermination de la position du détecteur.

Les détecteurs mobiles utilisés peuvent alors être du type de ceux décrits plus haut.

On comprendra que dans les deux modes de réalisation décrits ci-dessus, le ou les détecteurs sont situés à l'extérieur du guide d'onde et mesure l'intensité des ondes évanescentes. Cependant, il est possible de positionner ces détecteurs au sein même du guide afin de réaliser les mesures sur l'onde stationnaire elle-même. Mais dans ce cas, la présence du détecteur provoque des réflexions de la lumière qui doivent éventuellement être corrigées.

Dans les deux modes de réalisation, suite à la détection par le ou les détecteurs, on réalise un échantillonnage des signaux fournis. Le dispositif comprend en outre des systèmes de multiplexage de l'information issue des détecteurs locaux, un calculateur pouvant être un processeur, un micro-ordinateur, un DSP, pour des traitements analogiques ou numériques.

Le spectre de l'onde est alors obtenu par transformée de Fourier des signaux fournis par le ou les détecteurs.

Selon une variante, il est également possible d'obtenir le spectre de l'onde par une régression par rapport à une table de valeurs fixes.

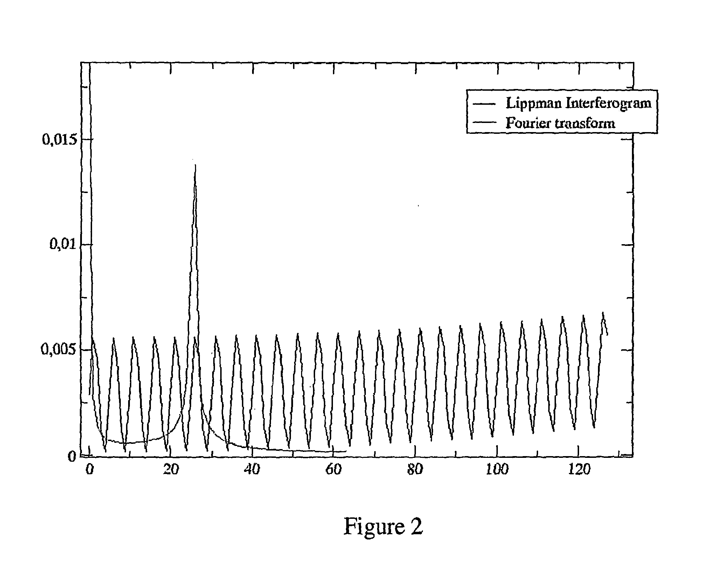

La figure 2 illustre alors un exemple d'interférogramme obtenu grâce au détecteur selon l'invention pour une onde monochromatique.

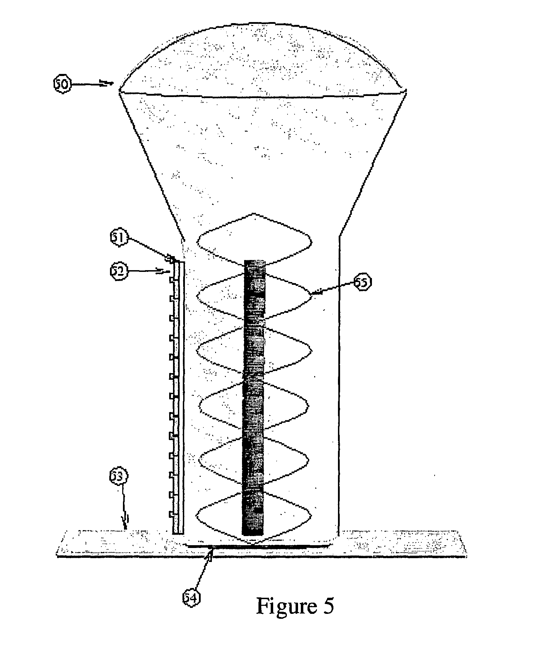

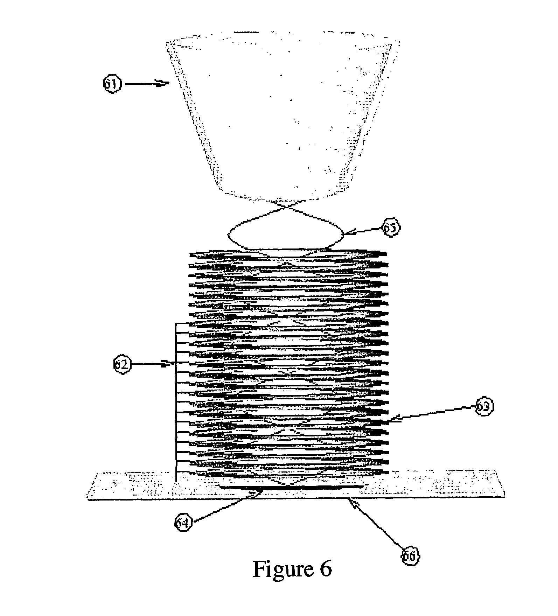

L'invention concerne également un système d'imagerie spectrométrique comprenant une pluralité de détecteurs tels que nous venons de les décrire disposés en matrice. Les figures 5 et 6 représentent deux réalisations d'un élément constitutif de cette pluralité de détecteurs disposés à la surface d'un support de la matrice de détecteur. Une microlentille ou un cornet permet d'adapter l'onde au guide monomode et dégageant un espace sur le support qui permet d'intégrer l'électronique nécessaire au fonctionnement du détecteur.

On reconnaîtra sur les figures 5 et 6 les éléments principaux des détecteurs précédemment décrits, avec un miroir 54, 64, un support 53, 66 supportant le guide d'onde et le miroir, et un ensemble de détecteurs 52, 62.

Afin de réaliser des mesures sur les ondes au niveau de cette matrice, on utilise par ailleurs une optique disposée de telle façon que la matrice des détecteurs selon l'invention est dans le plan focal de l'optique.

Les signaux issus de tous les détecteurs de la matrice sont récupérés, et le spectre est donc reconstitué pour tous les points par un calculateur tel que décrit plus haut. Une image spectrale est donc obtenue.

Il est entendu que pour minimiser le temps de calcul pour un grand nombre de détecteur formant une matrice de détection, il est possible de paralléliser les traitements.

L'invention est décrite dans ce qui précède à titre d'exemple. Il est entendu que l'homme du métier est à même de réaliser différentes variantes de l'invention sans pour autant sortir du cadre du brevet.

## Revendications

1. Détecteur spectroscopique interférentiel **caractérisé en ce qu'**il comprend un guide d'onde (1) présentant une face d'entrée (1a) et un miroir (2) sur la face opposée (1b) pour créer une onde stationnaire au sein du guide d'onde par effet Lippmann et des moyens de détection (5) de rayonnements électromagnétiques délivrant un signal électrique fonction de l'intensité locale de l'onde électromagnétique, ladite détection étant réalisée entre la face d'entrée (1a) et le miroir (2), et lesdits moyens de détection étant adaptés à réaliser un échantillonage de l'interférogramme produit par l'onde stationnaire.

2. Détecteur selon la revendication 1, **caractérisé en ce que** lesdits moyens de détection comprennent au moins un élément optique apte à extraire au moins une partie de l'onde électromagnétique dudit guide d'onde.

3. Détecteur selon la revendication 1, **caractérisé en ce que** lesdits moyens de détection comprennent une pluralité de détecteurs locaux répartis entre la face d'entrée et le miroir.

4. Détecteur selon la revendication 1, **caractérisé en ce que** lesdits moyens de détection comprennent au moins un détecteur local mobile entre la face d'entrée et miroir.

5. Détecteur selon la revendication 4, **caractérisé en ce qu'**il comporte des moyens de détermination de la position du détecteur local mobile, pour délivrer des signaux en fonction de la position dudit détecteur local et de l'intensité locale de l'onde électromagnétique.

6. Détecteur selon la revendication 3, **caractérisé en ce que** lesdits détecteurs locaux sont sensiblement équidistants

7. Détecteur selon la revendication 3, **caractérisé en ce que** lesdits détecteurs locaux répartis selon une loi apériodique afin de minimiser la perturbation de l'onde stationnaire.

8. Détecteur selon la revendication 3 ou 6, **caractérisé en ce que** deux détecteurs locaux consécutifs sont éloignés d'une distance sensiblement égale au quart de la longueur d'onde correspondant à la valeur inférieure du spectre étudié.

9. Détecteur selon la revendication 3 ou 6, **caractérisé en ce que** lesdits détecteurs sont plus petits que le quart de la longueur d'onde correspondant à la valeur inférieure du spectre étudié.

10. Détecteur selon l'une quelconque des revendications précédentes, **caractérisé en ce qu'**il comporte en outre un calculateur réalisant un échantillonnage des signaux fournis par lesdits détecteurs locaux, ainsi que la détermination du spectre en fonction desdits signaux échantillons.

11. Détecteur selon l'une quelconque des revendications 1 à 10, **caractérisé en ce qu'**il comporte en outre un calculateur analogique fournissant le spectre en fonction desdits signaux fournis par les détecteurs locaux.

12. Détecteur selon la revendication 1, **caractérisé en ce que** le guide d'onde est de type monomode.

13. Système d'imagerie spectrométrique **caractérisé en ce qu'**il est constitué par une pluralité de détecteurs conformes à l'une au moins des revendications précédentes, disposés selon une matrice, les faces d'entrée des détecteurs étant dans le plan focal d'une optique d'entrée.

14. Système d'imagerie spectrométrique selon la revendication 13, **caractérisé en ce que** ladite matrice est régulière.

15. Système d'imagerie spectrométrique selon la revendication 13, **caractérisé en ce que** ladite matrice est irrégulière.

## Claims

1. An interference spectroscopic detector **characterized in that** it comprises a wave guide (1) having an inlet face (1a) and a mirror (2) on the opposite face (1b), for creating a standing wave within the wave guide by a Lippmann effect, and means for detecting (5) electromagnetic rays delivering an electric signal depending on the local intensity of the electromagnetic wave, said detection being performed between the inlet face (1a) and the mirror (2), and said detection means being adapted to perform a sampling of the interferogram produced by the standing wave.

2. A detector according to claim 1, **characterized in that** said detection means comprise at least an optical element capable of extracting at least a part of the electromagnetic wave from said wave guide.

3. A detector according to claim 1, **characterized in that** said detection means comprise a plurality of local detectors distributed between the inlet face and the mirror.

4. A detector according to claim 1, **characterized in that** said detection means comprise at least a mobile local detector between the inlet face and the mirror.

5. A detector according to claim 4, **characterized in that** it includes means for determining the position of the mobile local detector, to deliver signals depending on the position of said local detector and the local intensity of the electromagnetic wave.

6. A detector according to claim 3, **characterized in that** said local detectors are substantially equispaced.

7. A detector according to claim 3, **characterized in that** said local detectors are distributed according to an aperiodic law so as to minimize the disturbance of the standing wave.

8. A detector according to claim 3 or 6, **characterized in that** two consecutive local detectors are spaced by a distance substantially equal to a quarter of the wave length corresponding to the lower value of the studied spectrum.

9. A detector according to claim 3 or 6, **characterized in that** said detectors are smaller than the quarter of the wave length corresponding to the lower value of the studied spectrum.

10. A detector according to any one of the preceding claims, **characterized in that** it further includes a calculator performing a sampling of the signals supplied by said local detectors, as well as the determination of the spectrum, depending on said sample signals.

11. A detector according to any one of claims 1 to 10, **characterized in that** it further includes an analog calculator providing the spectrum depending on said signals supplied by the local detectors.

12. A detector according to claim 1, **characterized in that** the wave guide is of the single mode type.

13. A spectrometric imaging system, **characterized in that** it is composed of a plurality of detectors complying with at least one of the preceding claims, positioned according to a matrix, the inlet faces of the detectors being in the focal plane of inlet optics.

14. A spectrometric imaging system according to claim 13, **characterized in that** said matrix is regular.

15. A spectrometric imaging system according to claim 13, **characterized in that** said matrix is irregular.

## Patentansprüche

1. Spektroskopischer Interferenzsensor, **dadurch gekennzeichnet, dass** er einen Wellenleiter (1) mit einer Eingangsseite (1a) und einem Spiegel (2) an der gegenüberliegenden Seite (1b), um eine stationäre Welle innerhalb des Wellenleiters durch Lippmann-Effekt zu erzeugen, umfasst, sowie Erfassungsmittel (5) von elektromagnetischen Strahlungen, die je nach lokaler Stromstärke der elektromagnetischen Strahlungen ein elektrisches Signal liefern, wobei die genannte Erfassung zwischen der Eingangsseite (1a) und dem Spiegel (2) erfolgt, und wobei die genannten Erfassungsmittel geeignet sind, eine Abtastung des von der stationären Welle erzeugten Interferogramms durchzuführen.

2. Sensor gemäß Anspruch 1, **dadurch gekennzeichnet, dass** die genannten Erfassungsmittel mindestens ein optisches Element umfassen, das mindestens einen Teil der elektromagnetischen Welle aus dem genannten Wellenleiter entnehmen kann.

3. Sensor gemäß Anspruch 1, **dadurch gekennzeichnet, dass** die genannten Erfassungsmittel eine Mehrzahl von lokalen, zwischen der Eingangsseite und dem Spiegel verteilten Sensoren umfassen.

4. Sensor gemäß Anspruch 1, **dadurch gekennzeichnet, dass** die genannten Erfassungsmittel mindestens einen zwischen der Eingangsseite und dem Spiegel mobilen Sensor umfassen.

5. Sensor gemäß Anspruch 4, **dadurch gekennzeichnet, dass** er Bestimmungsmittel der Position des mobilen lokalen Sensors umfasst, um je nach Position des genannten lokalen Sensors und lokaler Stromstärke der elektromagnetischen Welle Signale zu liefern.

6. Sensor gemäß Anspruch 3, **dadurch gekennzeichnet, dass** die genannten lokalen Sensoren etwa in gleichem Abstand angeordnet sind.

7. Sensor gemäß Anspruch 3, **dadurch gekennzeichnet, dass** die genannten lokalen Detektoren gemäß einem unperiodischen Gesetz verteilt sind, um die Störung der stationären Welle zu minimieren.

8. Sensor gemäß Anspruch 3 oder 6, **dadurch gekennzeichnet, dass** zwei aufeinanderfolgende lokale Sensoren um einen Abstand entfernt sind, der etwa ein Viertel der Wellenlänge beträgt, entsprechend dem unteren Wert des betrachteten Spektrums.

9. Sensor gemäß Anspruch 3 oder 6, **dadurch gekennzeichnet, dass** die genannten Sensoren kleiner sind als das Viertel der Wellenlänge, entsprechend dem unteren Wert des betrachteten Spektrums.

10. Sensor gemäß einem der vorangehenden Ansprüche, **dadurch gekennzeichnet, dass** er ferner einen Rechner umfasst, der eine Abtastung der von den genannten lokalen Sensoren gelieferten Signale durchführt, sowie die Bestimmung des Spektrums entsprechend den genannten Abtastsignalen.

11. Sensor gemäß einem der Ansprüche 1 bis 10, **dadurch gekennzeichnet, dass** er ferner einen analogischen Rechner umfasst, der das Spektrum entsprechend den genanten von den lokalen Sensoren gelieferten Signalen bereitstellt.

12. Sensor gemäß Anspruch 1, **dadurch gekennzeichnet, dass** der Wellenleiter vom Einmoden-Typ ist.

13. Spektrometrisches Bildgebungssystem, **dadurch gekennzeichnet, dass** es aus einer Mehrzahl von mindestens einem der vorangehenden Ansprüche entsprechenden Sensoren besteht, die gemäß einer Matrix angeordnet sind, wobei die Eingangsseiten der Sensoren sich in der fokalen Ebene einer Eingangsoptik befinden.

14. Spektrometrisches Bildgebungssystem gemäß Anspruch 13, **dadurch gekennzeichnet, dass** die genannte Matrix regelmäßig ist.

15. Spektrometrisches Bildgebungssystem gemäß Anspruch 13, **dadurch gekennzeichnet, dass** die genannte Matrix unregelmäßig ist.
